# EUROPEAN PATENT SPECIFICATION

(11) **EP 3 983 904 B1**
(45) Date of publication and mention of the grant of the patent: **15.04.2026**
(21) Application number: 20737073.5
(22) Date of filing: 15.06.2020
(51) Int. Cl.: G06F 16/182

(54) **DISTRIBUTED GLOBAL OBJECT STORAGE**
VERTEILTE GLOBALE OBJEKTSPEICHERUNG
STOCKAGE OBJET GLOBAL DISTRIBUÉ

(30) Priority: 17.06.2019 US 201962862608 P; 16.03.2020 US 202016820536
(43) Date of publication of application: 20.04.2022
(73) Proprietor: Netflix, Inc., Los Gatos, California 95032 (US)
(72) Inventor: KASI, Kishore, Los Gatos, California 95032 (US); PAPAPANAGIOTOU, Ioannis, Los Gatos, California 95032 (US); MADAPPA, Shashi Shekar, Los Gatos, California 95032 (US); ENUGULA, Sridhar, Los Gatos, California 95032 (US); JAYARAMAN, Deva, Los Gatos, California 95032 (US); YELEVICH, Victor, Los Gatos, California 95032 (US); CHEN, Shunfei, Los Gatos, California 95032 (US); GINTER, Christopher, Los Gatos, California 95032 (US); JOHANSSON, Olof, Los Gatos, California 95032 (US); BIRARI, Shailesh, Los Gatos, California 95032 (US)
(74) Representative: Kilburn & Strode LLP
(86) International application number: PCT/US2020/037818
(87) International publication number: WO 2020/257129

(56) References cited:
- US-A1- 2005 086 285
- US-A1- 2014 344 234
- US-A1- 2018 107 527
- LU QIMING ET AL: "BigData Express: Toward Schedulable, Predictable, and High-Performance Data Transfer", 2018 IEEE/ACM INNOVATING THE NETWORK FOR DATA-INTENSIVE SCIENCE (INDIS), IEEE, 11 November 2018 (2018-11-11), pages 75 - 84, XP033522375, DOI: 10.1109/INDIS.2018.00011

## Description

### BACKGROUND

### Field of the Various Embodiments

Embodiments of the present disclosure relate generally to distributed computing systems and, more specifically, to distributed global object storage.

### Description of the Related Art

Distributed computing systems include many different hardware and software components that operate to provide a variety of services to clients of the distributed computing systems. For example, one distributed computing system executing video production services could provide various geographically-dispersed users the ability to collaborate by generating and modifying various media assets that combine to form an audiovisual program.

In various instances, due to the disparate locations of filming and editing, a given media asset may need to be physically transported between users. In such instances, a storage latency associated with physically transporting a given media asset through a pipeline of collaborating users may cause significant latency before the media asset is finalized. Further, various security measures are needed for the secure physical transportation of the media asset across varying geographic locations.

Due to the complexities and latencies with physical transportation of media assets, various users employ vendors to transfer the content to a single repository. However, these users may still need to physically transport the media asset before the vendor can transfer the media object to the single repository. Further, because each vendor may use differing file storage and transfer systems, the media assets may be transferred to the repository inefficiently or insecurely.

As the foregoing illustrates, what is needed in the art is a more effective system to store and distribute data associated with a media item in order to efficiently bolster collaboration between multiple users.

US2018107527A1 describes a computer program product, system, and method for determining storage tiers for placement of data sets during execution of tasks in a workflow. A representation of a workflow execution pattern of tasks for a job indicates a dependency of the tasks and data sets operated on by the tasks. A determination is made of an assignment of the data sets for the tasks to a plurality of the storage tiers based on the dependency of the tasks indicated in the workflow execution pattern. A moving is scheduled of a subject data set of the data sets operated on by a subject task of the tasks that is subject to an event to an assigned storage tier indicated in the assignment for the subject task subject. The moving of the data set is scheduled to be performed in response to the event with respect to the subject task.

"BigData Express: Toward Schedulable, Predictable, and High-Performance Data Transfer" by Lu Qiming et al describes that Big Data has emerged as a driving force for scientific discoveries. Large scientific instruments (e.g., colliders, and telescopes) generate exponentially increasing volumes of data. To enable scientific discovery, science data must be collected, indexed, archived, shared, and analyzed, typically in a widely distributed, highly collaborative manner. Data transfer is now an essential function for science discoveries, particularly within big data environments. Although significant improvements have been made in the area of bulk data transfer, the currently available data transfer tools and services can not successfully address the high-performance and time-constraint challenges of data transfer required by extreme-scale science applications for the following reasons: disjoint end-to-end data transfer loops, cross-interference between data transfers, and existing data transfer tools and services are oblivious to user requirements (deadline and QoS requirements). Fermilab has been working on the BigData Express project to address these problems. BigData Express seeks to provide a schedulable, predictable, and high-performance data transfer service for big data science. The BigData Express software is being deployed and evaluated at multiple research institutions, which include UMD, StarLight, FNAL, KISTI, KSTAR, SURFnet, Ciena, and other sites. Meanwhile, the BigData Express research team is collaborating with the StarLight International/National Communications Exchange Facility to deploy BigData Express at various research platforms, including Pacific Research Platform, National Research Platform, and Global Research Platform. It is envisioned that we are working toward building a high-performance data transfer federation for big data science.

US2005086285A1 describes a distributed data processing system for performing data-related task implemented with a scalable hub and spoke architecture. The hub-and-spoke architecture comprises a central "hub" system site connected, through one or more high speed communication links, to one or more spoke systems, each of which may be located at a remote spoke system (which may be geographically dispersed from one another). While some information technology infrastructure is necessary for both the hub and the spoke systems, the expensive data processing and control systems, for implementing the majority of the system architecture, and where the majority of automated processing occurs, are concentrated at the hub location. Thus, most of the critical data processing activities are centralized at the hub system, while other activities that either must be performed, or are advantageous to be performed at a particular remote location, are executed by one or more spoke systems. Information generated from localized spoke system operations is transmitted to the hub system through communication links and other types of data or requested work can likewise be readily transmitted from the hub system to one or more spoke systems in real time.

US2014344234A1 describes an information management system which includes: a central storage or information manager configured to perform certain control functions, one or more data agents executing on the client computing devices configured to process primary data, and one or more media agents executing on the one or more secondary storage computing devices for performing tasks involving the secondary storage devices.

### SUMMARY

The invention to which this patent is directed is defined by the attached claims.

At least one technological advantage of the disclosed techniques relative to the prior art is that a storage controller within a given network can efficiently transfer, store, and retrieve portions of stored objects such that applications operating within the given network can efficiently access and modify the portions of the stored objects. Using a storage controller to manage a tiered group of storage partitions enables a distributed storage system to efficiently scale storage capabilities based on multiple parameters, including workflow parameters associated with users performing tasks using resources within the distributed computing system.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1A illustrates a network infrastructure used to transfer media content to one or more spoke networks, according to various embodiments of the present disclosure.
Figure 1B illustrates a more-detailed version of the hub network of the network infrastructure of Figure 1A, according to the various embodiments.
Figure 2 illustrates more-detailed version of multiple spoke networks of the network infrastructure of Figure 1A, according to the various embodiments.
Figure 3 sets forth a flow diagram of method steps for storing a content item within a storage partition of the network infrastructure of Figure 1A, according to the various embodiments.
Figure 4 sets forth a flow diagram of method steps for transferring a content item between storage partitions of the network infrastructure of Figure 1A, according to the various embodiments.

### DETAILED DESCRIPTION

In the following description, numerous specific details are set forth to provide a more thorough understanding of the embodiments of the present disclosure. However, it will be apparent to one of skill in the art that the embodiments of the present disclosure may be practiced without one or more of these specific details.

### Overview

Distributed computing systems include many different hardware and software components that operate to provide a variety of services to clients of the distributed computer systems. For example, a distributed computing system executing video production services could provide multiple users with the ability to upload and modify various portions of video files in order to produce an audiovisual program. In various instances, the contributors to an audiovisual program are geographically dispersed, often over multiple continents. In addition, portions of the production studio may be remote, such as when video is shot on-location and is physically transported to a specific production location in order to upload various content items into a single content hub. The content items may then be distributed from the centralized content hub to various destinations.

Prior art techniques require each studio production independently find solutions to address the need of sharing content between contributors. For example, some contributors would physically transport content items between contributors, such as by using production assistants to carry between vendors physical hard drives storing content items. In another example, contributors would send the content items to third-party vendors that would manage the transfer of the content items to a centralized content hub. However, such techniques greatly increased the latency associated with the transport of the content items among multiple users. Such latency consequently causes a great increase in the time required to complete a production workflow for an audiovisual program. Further, the use of disparate vendors leads to various security and efficiency issues associated with different vendors using different technologies and file systems to transfer files. In addition, until the content items are finally uploaded to the centralized content hub, there is no way to efficiently index content items while the items are locally produced and modified.

In contrast, the disclosed network and associated disclosed techniques enable a distributed global object storage system to ingest, index, and securely transfer portions of content items between disparate locations. The global object storage system can therefore provide a combined, tiered storage system that tracks the location of various content items as those items are added to the system. Further, the global object storage system can efficiently transfer various portions of content items to local networks, increasing the efficiency of transferring content items to geographically-local networks, as the latency between transfers is decreased.

In various embodiments, the distributed global object storage system includes various tiers of storage dispersed between a hub network and multiple geographically-distributed spoke networks. Each network contains one or more storage partitions that are able to store portions of various content items as objects. When a contributor generates a new content item in a local spoke network, a storage controller included in the local spoke network determines an applicable storage partition in the local spoke network that is to store the content item. The storage controller causes the content item to be ingested and stored in the applicable local storage partition. Once stored, the storage controller sends a message to the hub network that identifies the storage location of the content item within the local spoke network. The hub network then indexes the location of the content item, as well as other information about the content item.

In some embodiments, the hub network includes a media orchestrator that receives information associated with the location of portions of various content items, as well as workflow information associated with the content items. The media orchestrator determines a scheduled task that requires a particular portion of a content item, as well as the location that the scheduled task is to be performed based on the received information. The media orchestrator communicates with various storage controllers, including a storage controller in the local network that is currently storing the portion of the content item and the storage controller in the target local network where the scheduled task is to be performed.

The media orchestrator sends commands to both storage controllers in order to schedule the transfer of the portions of the content item to the desired location in the storage plane of the target local network, where the transfer is to be conducted in a time period that enables the scheduled task to be performed at the scheduled time. The applicable storage controllers then cause the portions of the content item to move to a storage partition associated with the target local network. In various embodiments, in order to increase efficiency when performing the task, the selected storage partition where the content item is stored is a tiered storage partition than enables high-speed transfers between the storage partition and to the location where the scheduled task is to be performed (e.g., the storage partition is physically proximate to the workstation used to perform the scheduled task). Thus, the latency associated with accessing the content item from the new storage partition, as opposed to previous storage partition (e.g., a storage partition at a more-distant location), is decreased.

Advantageously, a storage controller within a given network can efficiently transfer, store, and retrieve portions of stored objects such that applications operating within the given network can efficiently access and modify the portions of the stored object. As discussed above, conventional content hubs do not effectively index portions of content items as the content items are added or modified, nor do conventional content hub systems efficiently transfer portions of content items between local networks of a given network infrastructure. As a result, contributors in different geographic locations have difficulty efficiently performing tasks that require accessing portions of a particular content item, due to such factors as waiting to access the content item, as well as latency associated with accessing the content item from long distances.

By contrast, a distributed storage network that uses the disclosed storage controllers efficiently store portions of content items in local storage and transfer the portions of content items to other local networks in a manner that enables contributors to efficiently perform tasks due to decreases in wait time and latency. Further, a distributed storage network that uses the disclosed storage controllers to manage a tiered group of storage partitions enables a distributed storage network to efficiently scale local storage capabilities based on various parameters, including storage parameters, workflow parameters, and costs associated with users performing tasks using resources within the distributed computing system.

### Distributed Global Object Storage System Overview

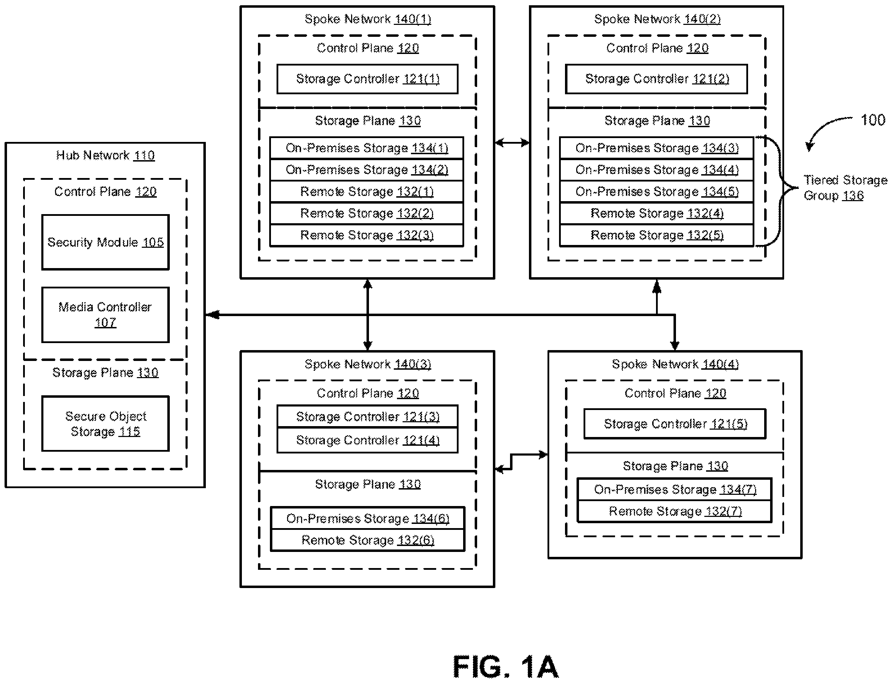

Figure 1A illustrates a network infrastructure used to transfer media content to one or more spoke networks, according to various embodiments of the present disclosure. As shown, network infrastructure 100 includes, without limitation, hub network 110 and spoke networks 140 (e.g., 140(1)-140(4)). Hub network 110 and spoke networks 140 respectively include control plane 120 and storage plane 130. Hub network 110 includes security module 105, media controller 107, and secure object storage 115. Each spoke network 140 includes at least one storage controller (e.g., 121(1)-121(5)), and a tiered storage group 136 that includes at least one remote storage partition (e.g., 132(1)-132(7)) and at least one on-premises storage partition (e.g., 134(1)-134(7)).

Each spoke network 140 is connected to hub network 110 via one or more media channels that are configured to transport large files and objects, and/or communications channels to transmit messages between components. In operation, media controller 107 coordinates with one or more storage controllers 121 (e.g., storage controllers121(4) in spoke network 140(3)) in a particular spoke network 140 in order to cause a secure transfer of one or more portions of a content item between storage partitions, such as a transfer of a first portion of a content item from remote storage partition 132(6) to secure object storage 115 in hub network 110, or alternatively, to on-premises storage partition 134(4) in spoke network 140(2). In various embodiments, media controller 107 may communicate with security module 105 in order to encrypt portions of content items and enable secure transfer of the encrypted portions between components.

In various embodiments, a content item may be a media asset, media asset metadata, and/or other data associated with digital media. In some embodiments, the content item may be a portion of a single digital media asset. For example, an audiovisual file could be split and converted into multiple objects. Each object could be an individual content item with a separate object identifier, where the individual content item is a clip of a discrete portion of the audiovisual file. In another example, the audiovisual file could be split into objects representing separate components, such as separate audio object(s), subtitle object(s), visual effect object(s), etc.

In some embodiments, portions of a given content item may be stored as multiple portions. In such instances, multiple portions of the content item may be stored in different storage partitions. For example, a content item could be a scene of a film. In such instances, a portion of the content item, such as a 10-second period of the scene, may be stored separately and transferred from remote storage 132(5) in spoke network 140(2) to on-premises storage 134(3) in spoke network 140(2) in anticipation for a scheduled visual effects (VFX) task. In some embodiments, each portion of a content item may have a different object identifier while sharing a common file identifier. In such instances, media controller 107 may use the file identifier to locate the storage partitions in which each portion of the content item, identified by the separate object identifiers and associated with the file identifier, are stored within network infrastructure 100.

Hub network 110 and spoke network(s) 140 (e.g., 140(1)-140(4)) include pluralities of network communications systems, such as routers and switches, configured to facilitate data communication between devices included in hub network 110 and devices included in spoke network(s) 140. Persons skilled in the art will recognize that many technically-feasible techniques exist for building hub network 110 and spoke network(s) 140, including technologies practiced in deploying the well-known internet communications network. For example, networks 110, 140 may include a wide-area network (WAN), a local-area network (LAN), and/or a wireless (Wi-Fi) network, among others. In various embodiments, one or more communications protocols, such as transmission control protocol (TCP), internet protocol (IP), and/or user datagram protocol (UDP) may be employed to transport messages and/or media data (e.g., portions of content items) between networks 110, 140.

Each network 110, 140 includes a separate control plane 120 and storage plane 130. In various embodiments, various components in control plane 120 and/or storage plane 130 are distributed between networks 110, 140. In operation, components in control plane 120 manage the ingestion of data into components of storage plane 130. Further, components in control plane 120 manage indexing and transfer of data that is stored in storage plane 130.

Control plane 120 is a portion of hub network 110 and/or spoke network 140 that manages the storage of data in storage plane 130. In various embodiments, one or more components included in control plane 120 may cause received media content items and/or other data (e.g., metadata, workflow data, other application data, etc.) to be securely stored in at least one location within storage plane 130. Additionally or alternatively, one or more components of control plane 120 may also manage local access of content items stored in storage plane 130. For example, media orchestrator 111 and/or one or more storage controllers 121 included in control plane 120 could manage the secure access of a media application to data stored in storage plane 130.

Security module 105 may be an application executed by one or more devices in hub network 110 that enables secure transfer of content items between devices. In some embodiments, security module 105 may respond to one or more transfer requests generated by media controller 107 by providing security keys, authorization tokens, etc., to applicable devices. For example, media controller 107 could, upon receipt of tokens and/or keys from security module 105, distribute the tokens and/or keys to one or more storage controllers 121 in order to encrypt the content items and enable secure transfer of the encrypted content items between storage partitions.

Media controller 107 is an application executed by one or more devices included in hub network 110, such as a server, that manages the ingestion and/or transfer of content items. In various embodiments, media controller 107 may act as a central catalog of content items, and/or a centralized orchestrator service that manages the indexing and/or transfer of data stored in portions of storage plane 130.

For example, media controller 107 could receive information from storage controller 121(3) about new content items that were ingested in spoke network 140(3), such as when a production stores new footage in on-premises storage 134(6). In such instances, media controller 107 could update a media catalog that indexes the new footage as one or more content items, and stores information about the content items, such as the storage partition whether the items are stored (e.g., on-premises storage 134(6)), the location of the content item (e.g., spoke network 140(3)), one or more workers associated with the content item, scheduled tasks associated with the content item, and so forth.

In various embodiments, media controller 107 may receive and analyze data associated with one or more workflows (e.g., workflow pipeline, individual tasks, authorized users, etc.), and/or information that is associated with content items stored in hub network 110 (e.g., stored in secure object storage 115) and/or spoke networks 140 (e.g., stored in a partition in a tiered storage group 136). Based on analysis of such information, media controller 107 may facilitate the transfer of complete content items or portions of content items between storage partitions included in networks 110, 140, such as a content item stored in secure object storage 115 and/or portions of content items stored in storage partitions 132, 134 that are included in at least one spoke network 140.

For example, media controller 107 could include a media orchestrator that receives information from the media catalog, where the media catalog provides information that specifies the network and/or storage partition that is currently storing a particular portion of a content item within network infrastructure 100. Media controller 107 could, for example, identify the network as spoke network 140(4) and/or identify the particular storage partition as remote storage 132(7). In such instances, the media orchestrator included in media controller 107 could send a message to storage controller 121(5) that includes a command for storage controller 121(5) to retrieve the locally-stored portion of the content item. Storage controller 121(5) could respond by retrieving the portion of the content item for use, for example, by a media application operating within spoke network 140(4).

In various embodiments, the media orchestrator included in media controller 107 could receive information from one or more media workflows. Such information may be associated with one or more production workflows of various types. Such production workflow types may include, for example, production tasks that are to be performed by one or more users in relation to content items stored within network infrastructure 100. Additionally or alternatively, such production workflow types may include archival tasks associated with storing content items in a specific storage tier within network infrastructure 100 (e.g., transferring a portion of a content item from remote storage 132(4) to an archival storage tier included in secure object storage 115).

In various embodiments, media controller 107 may analyze the workflow information in order to identify a particular spoke network 140 (e.g., spoke network 140(3)) associated with a task that is scheduled to be performed with a particular portion of a content item. For example, media controller 107 may employ one or more heuristics associated with the portion of the content item and the scheduled task (e.g., cost, object type, speed, workflow, hardware characteristics, etc.) to determine a storage tier and/or specific storage partition that enables efficient access to the portion of the content item for the scheduled task. Upon employing one or more heuristics, media controller 107 may identify a target storage partition in which to store the portion of the content item to optimize performance of the scheduled task.

In various embodiments, media controller 107 may employ a cost heuristic to determine costs associated with storage of a content item in a particular storage partition, as well as costs associated with transferring the content item. For example, storing data in remote storage 132 could be associated with a daily cost (e.g., $0.0025 per GB per month), while transferring data from secure object storage 115 to remote storage 132 could have a separate associated cost (e.g., $0.005 per GB). Media controller 107 may select a storage partition that minimizes transfer and storage costs when been accessed for a task. In some embodiments, media controller 107 may employ an object type heuristic to determine characteristics about the object, such as the object size, applications that can open the object, type of media (e.g., text, video, image, audio, etc.), and so forth. Additionally or alternatively, media controller 107 may employ a speed heuristic to determine transfer speeds associated with one or more storage partitions. Such speed metrics may include retrieval speeds associated with accessing an content item, as well as ingress and egress speeds associated with transferring a file into or out from the storage partition.

In some embodiments, media controller 107 may employ a workflow heuristic to determine information about a task that is to be performed as part of a production workflow. Such information may include the user(s) assigned to the task, the location where the task is to be performed, the scheduled start time for the task, the time period for completing the task, and so forth. In various embodiments, media controller may employ the workflow heuristic to determine a target location and target time for the content item to be delivered to the target storage partition. In various embodiments, media controller 107 may employ a hardware characteristic heuristic to analyze characteristics of specific storage partitions, such as the remaining space available in the storage partition, the storage tier associated with the storage partition, the device health of the particular storage partition, and so forth. Media controller 107 could, for example, analyze the hardware characteristics to determine a particular storage partition within a storage tier that is to store the content item.

In various embodiments, media controller 107, may employ multiple heuristics in order to identify a particular storage partition and generate routing information to cause the content item to be transferred to the storage partition by a specific time. For example, media controller 107 could employ various heuristics to determine that storing the portion of the content item in on-premises storage 134(6) of spoke network 140(3) enables the user to access the portion of the content item in a location that is geographically proximate to the user. Accordingly, the closer proximity of the on-premises storage 134(6) the geographic location of the user could lower storage latency and retrieval times associated with accessing the portion of the content item from an workstation, and thus may increase the efficiency of the user when accessing the content item and performing her scheduled task. Upon determining that the target storage partition (e.g., on-premises storage 134(6)) is different than the storage partition in which the portion of the content item is currently stored (e.g., remote storage 132(7)), media controller 107 could communicate with one or more storage controllers 121 (e.g., storage controllers 121(3), 121(5)) in order to facilitate the transfer of the particular portion of the content item from the storage partition that is currently storing the portion to a new storage partition that will associated with the scheduled task.

In some embodiments, when media controller 107 facilitates the transfer of the specific content item, media controller 107 may receive a notification that a transfer of the specific content item is complete. In such instances, media controller 107 could then cause updates associated with the indexing of the content item. For example, the media orchestrator included in media controller 107 could cause an update to a media catalog and/or a media workflow included in media controller 107, where the update reflects the updated location of the specific content item, the storage partition storing the specific content item, and/or the completion of a particular task associated with the specific content item. In some embodiments, the update may indicate that the content item has been modified. In such instances, media controller 107 may cause a synchronization action to occur such that the modified content item is copied to secure object storage 115.

Storage plane 130 includes one or more devices in various networks 110, 140 that store data that can be accessed via control plane 120. For example, hub network 110 could include secure object storage 115, while each spoke network includes a tiered storage group 136 that includes one or more storage partitions 132, 134. In various embodiments, media controller 107 may manage each of the storage devices included in storage plane 130 as a composite tiered storage group. For example, media controller 107 could manage local storage of a workstation (e.g., local memory and/or storage within the workstation) as tier 0 storage, storage within tiered storage group 136 (e.g., on-premises storage 134, remote storage 132) as tier 1 storage, and/or secure object storage 115 as tier 2 storage. In some embodiments, a given storage tier may include multiple sub-tiers. For example, media controller 107 could manage tiered storage group such that on-premises storage partition 134 is managed as tier 1A storage, while remote storage 132 is managed as tier 1B storage.

In various embodiments, each of secure object storage 115, and/or storage partitions may store one or more copies of a portion of a given content item. In some embodiments, storage plane 130 may be stateless. In such instances, storage plane 130 may replicate a portion of a given content item and store multiple copies of portion across multiple storage devices and/or storage partitions. In such instances, failure of a single storage device or storage partition may not stop access to the portion of the content item, as a copy of the portion may be retrieved from another storage device and/or storage partition.

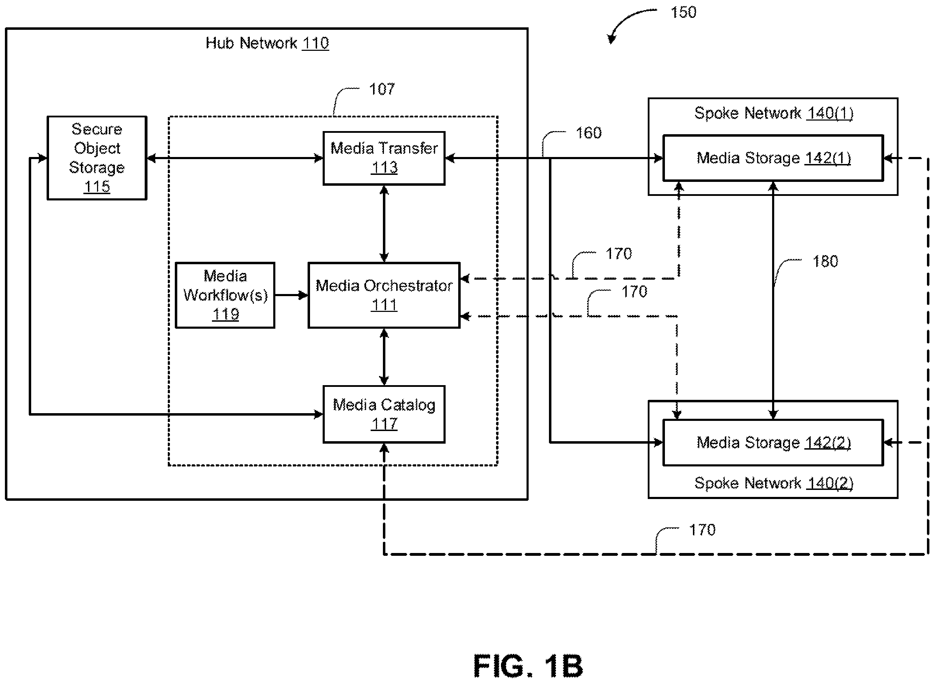

Secure object storage 115 may be, for example, one or more devices, such as one or more web servers, that store data from a plurality of sources. In various embodiments, secure object storage 115 may be an online storage service (OSS) (e.g., Amazon^{®} Simple Storage Service (S3), Google^{®} Cloud Storage, etc.) in which a catalog of thousands or millions of files and/or objects is stored and/or accessed. In some embodiments, secure object storage 115 also may provide computing and/or other processing services. Although only one secure object storage 115 is shown in Figure 1, in various embodiments, multiple secure object storage instances 115 (e.g., 115(1), 115(2), etc.) may be included in hub network 110. In various embodiments, secure object storage 115 may act as a source of truth for a given content item. In such instances, a content item stored in secure object storage 115 may be trusted more than differing copies of the content item stored in other storage partitions.

In some embodiments, media controller 107 may manage secure object storage 115 as a tiered storage group. For example, media controller 107 may manage multiple sub-tiers within secure object storage, such as a tier 2A "high-performance" storage associated with active objects associated with active production workflows, a tier 2B "mid-performance" storage associated with high-priority archival content items, and a tier 2C "low-performance" storage associated with low-priority archival content items.

In some embodiments, secure object storage 115 may translate stored objects into files such that a media application accessing an object from secure object storage 115 view the object as a file in an applicable file system. For example, a user could have a workstation that includes a Portable Operating System Interface (POSIX)-compliant file system. In such instances, secure object storage 115 and/or another application could translate the objects stored in secure object storage 115 such that the user may view the one or more objects associated with a content item as files native to the file system of the workstation.

In various embodiments, secure object storage 115 may permanently store one or more content items associated with an audiovisual program. For example, a portion of a content item associated with an audiovisual program may be temporarily stored in one or more spoke networks 140(1)-140(4) in order to enable users to perform tasks associated with the audiovisual program that require access to the content items (e.g., virtual effects, animation, translation, generating promotional materials, etc.). Once all tasks associated with the audiovisual program are complete, media controller 107 may coordinate the transfer of all the copies of the portion to secure object storage 115 for permanent storage as a portion of a stored object.

Spoke network(s) 140 (e.g., 140(1)-140(N)) include one or more networks connected to the hub network that include various storage controllers 121 and various storage partitions 132, 134. Each spoke network 140 is associated with a geographically-distinct region. In some embodiments, each spoke network 140 may be associated with a particular production studio and may have multiple storage partitions 132, 134 in storage plane 130 that are associated with geographically-distinct regions.

In various embodiments, media orchestrator 111 may cause the transfer of content items to a particular storage partition 132, 134 included in a particular spoke network 140 via the applicable storage controller 121. In such instances, the content item may be transferred between different storage partitions 132, 134 in different spoke networks 140 (e.g., remote storage partition 132(4) and on-premises storage partition 134(7)) in order for the content item to be in a storage partition that is geographically proximate to a user when the user accesses the content item. Such geographic proximity may thus lower latency when the user accesses the content item.

For example, hub network 110 could be located in an eastern portion of the United States, while each spoke network 140 have one or more storage partitions 132, 134 that are distributed in other geographic locations (e.g., spoke network 140(1) has on-premises storage 134(2) in Asia, spoke network 140(2) has remote storage 132(4), 132(5) in separate European locations, etc.). A given user that is scheduled to an animation task could be located in an eastern portion of Asia. In such instances, media controller 107 may refer to a media catalog and one or more workflows in order to determine that the user is scheduled to perform an animation task associated with a first portion of a content item that is stored in secure object storage 115 in hub network 110. Media controller 107 could determine a storage partition included in storage plane 130 that is geographically proximate to east Asia (e.g., remote storage 132(4)), and may communicate with the applicable storage controller for the region (e.g., storage controller 121(1)) in order to cause the first portion to be transferred and stored in storage partition 132(4).

Storage controller(s) 121 (e.g., 121(1)-121(N)) is a component included in control plane 120 of spoke network 140 that manages content items within storage plane 130 that is associated with a given spoke network 140. In various embodiments, storage controller 121 may send messages to media controller 107 that indicates a specific storage partition that is currently storing a complete content item or a portion of a content item. Additionally or alternatively, storage controller 121 may manage the transfer of a content item between a given storage partition in storage plane 130 and other devices (e.g., a different storage partition within spoke network 140, a transfer to a separate spoke network 140 and/or secure object storage 115, etc.). In various embodiments, storage controller 121 may communicate with media controller 107 via a communications channel in order to determine which content items to upload or download to other locations. In such instances, storage controller 121 may communicate with one or more storage partitions 132, 134 included in the tiered storage group 136 of the spoke network 140 in order to manage the transfer of the content item.

In various embodiments, storage controller 121 may register with media controller 107 by specifying current information, such as the amount of local storage available in tiered storage group 136. Additionally or alternatively, storage controller 121 may download metadata associated with a specific content item, and may cause the content item to be downloaded and stored locally in storage plane 130 of spoke network 140. For example, storage controller 121(1) could communicate with media controller 107 in order to receive information about a specific content item to download from secure object storage 115 to remote storage 132(1). Storage controller 121(1) could then communicate with a media transfer agent that optimizes the transfer of the specific content item, such as by using UDP-based communications to transmit the content item from secure object storage 115.

In some embodiments, storage plane 130 may be independent of control plane 120. In such instances, storage plane 130 and/or control plane 120 may be scaled independently. For example, spoke network 140(1) could include a single storage controller 121(1) that manages a tiered storage group 136 (e.g., 136(1) that includes three remote storage partitions 132(1)-132(3) and two on-premises storage partitions 134(1)-134(2)). In another example, two storage controllers 121(3)-121(4) could manage a tiered storage group 136 (e.g., 136(3)) that includes a single remote storage partition 132(6) and a single on-premises storage partition 134(6). In various embodiments, multiple remote storage partitions 132 and/or on-premises storage partitions 134 may be added to a given tiered storage group 136 without scaling the quantity of corresponding storage controller(s) 121.

Tiered storage group 136 includes one or more storage partitions associated with a given spoke network 140(1). In various embodiments, tiered storage group 136 may be a single tier in a composite tiered storage system that includes secure object storage 115 and/or local storage of connected workstations (not shown). In various embodiments, tiered storage group 136 may be a storage area network (SAN) that enables the size of tiered storage group 136 to be a virtual combination of the remote storage partitions 132 and/or on-premises storage partitions 134. In such instances, the storage partitions 132,134 included in tiered storage group 136 may be tiered based on multiple parameters, such as transfer latency, cost, technical characteristics, etc., such that a given content item is stored in a particular tier based on the parameters. In various embodiments, media controller 107 may execute one or more heuristics to determine a particular storage tier that is to store the given content item. For example, storage controller 121 could initially cause an ingested content item to be stored in tier 1B storage (e.g., stored in a remote storage partition 132). When media controller 107 applies one or more heuristics to determine that content item is to be accessed as part of a scheduled task that requires fast retrieval speeds, storage controller 121 could then cause the content item to be moved to tier 1A storage (e.g., stored in an on-premises storage partition 134) to lower the storage latency associated with the retrieval speed of the workstation accessing the content item from on-premises storage.

Each of remote storage partitions 132 (e.g., 132(1)-132(N)) and/or on-premises storage partitions 134 (e.g., 134(1)-134(N)) act as containers to store data. In various embodiments, a given storage partition 132, 134 may securely store content items as objects. In such instances, storage partition may include a key, provided by security module 105, to encrypt data such that access by other devices, such as a media application, requires the appropriate authorization and/or authentication.

On-premises storage partitions 134 may be one or more local storage devices located within spoke network 140. In various embodiments, an on-premises storage partition 134 may be located at one or more Internet Exchanges (IXs), an on-premises cache at a particular vendor location, a metropolitan edge, and/or a Demilitarized Zone (DMZ). Remote storage partition(s) 132 may be one or more cloud-based storage partitions, such as an Elastic Compute Cloud (EC2) instance, that are associated with a given spoke network 140. In various embodiments, remote storage partition 132 may be geographically proximate to the spoke network 140. In such instances, media applications operating in the spoke network 140 may experience lower latency when accessing content items stored in the corresponding remote storage partition 132.

Figure 1B illustrates a more-detailed version of the hub network 110 of the network infrastructure of Figure 1A, according to the various embodiments. As shown, network infrastructure 150 includes, without limitation, hub network 110 and spoke networks 140 (e.g., 140(1)-140(2)). Hub network 110 includes media controller 107 and secure object storage 115. Media controller 107 includes media orchestrator 111, media transfer agent 113, media catalog 117, and media workflow(s) 119 (e.g., 119(1), 119(2), etc.). Each spoke network 140 includes one or more media storage devices 142 (e.g., 142(1)-142(2)).

In various embodiments, each spoke network 140 includes one or more media storage device(s) 142 (e.g., 142(1)-142(N)) that include various components in control plane 120 and/or storage plane 130. For example, media storage device 142(1) may include two storage controllers 121 and a tiered storage group 136 that includes two on-premises storage partitions 134 and six remote storage partitions 132. Each media storage device 142 is connected to hub network 110 via media channel 160 and/or communications channel 170. In various embodiments, each media storage device 142 is connected to other media storage devices 142 via media channel 160 and/or media channel 180. In operation, media controller 107 includes a media orchestrator 111 that coordinates with one or more media storage devices 142 in order to cause a secure transfer of a content item stored in a media storage device 142 (e.g., media storage device 142(1)) and another device within network infrastructure 150. In such instances, the new location of the content item is updated in media catalog 117.

Each media storage device 142 (e.g., 121(1)-121(4)) may be a device included in one or more spoke networks 140 that stores data for one or more user associated with spoke network 140. In various embodiments, media storage device 142 may act as a container that stores data, including content items, which are accessed by one or more users associated with spoke network 140. In some embodiments, media storage device 142 may store content items associated with a plurality of users. For example, spoke network 140(2) could be a network associated with a studio that includes multiple users. In such instances, media storage devices 142(2) could store content items associated with various scheduled tasks that are being performed and/or are to be performed by the one or more users associated with the studio. In some embodiments, a user may not have direct access to hub network 110. In such instances, media controller 107 may cause the content items, which are to be accessed by the user for a scheduled task, to be transferred to media storage device 142(2). Once stored in media storage device 142(2), the user may implement various techniques to transfer the content items from media storage device 142(2) to a local storage (e.g., a personal storage drive of a workstation and/or endpoint device).

In various embodiments, one or more devices in spoke network 140 may communicate with media orchestrator 111 in order to initiate the transfer of content items between storage devices. For example, media storage device 142(1) included in spoke network 140(1) could communicate with media orchestrator 111 in order to cause the transfer of a content item from secure object storage 115 to media storage device 142(1) via media channel 160. Such transfers could include media storage device 142(1) initially downloading the content item in anticipation of a scheduled task of a user that requires access to the content item. Additionally or alternatively, media orchestrator 111 could cause an upload of the content item from media storage device 142(1) to secure object storage 115 once the scheduled task is completed. In some embodiments, multiple media storage devices 142 may be included in a common spoke network 140. In such instances, a user may have access to at least one media storage device 142 in order to access a given content item.

In some embodiments, media orchestrator 111 may refer to media catalog 117 to determine the location (e.g., a specific spoke network 140 and/or media device 142) of a specific content item. In such instances, media catalog 117 may identify which network(s) (e.g., hub network 110, spoke network 140(1)) are currently storing at least one copy of the content item. In some embodiments, media catalog 117 may further specify the storage device (e.g., secure object storage 115, media storage device 142(1)) and/or a particular storage partition 132, 134 in which the content item is located. In some embodiments, a given content item may be a file associated with multiple objects. In such instances, media catalog 117 may index each object by recording the object identifier, and may associate each object identifier to the file.

In various embodiments, media orchestrator 111 could refer to one or more media workflow(s) 119 (e.g., 119(1), 119(2), etc.) in order to determine which media device 142 is to store a content item, and/or routing information about how the content item is to be transferred. Media orchestrator 111 may also determine the current location of the specific content item by referring to media catalog 117. Upon determining the location of the specific content item, media orchestrator 111 may generate one or more messages that include commands for a particular storage controller 121 to retrieve the specific content. In instances where media catalog does not specify the particular storage partition 132, 134 in which the specific content item is located, storage controller 121 may connect to one or more storage partitions 132, 134 within the tiered storage group 136 of a particular spoke network 140 in order to determine the exact location of the specific item within a particular storage partition 132, 134 and retrieve the specific content item for transfer to a media application and/or a separate storage partition 132, 134. In various embodiments, media orchestrator 111 and/or storage controller 121 may update media catalog 117 to reflect the current location of the specified content item after the transfer is complete.

In various embodiments, media orchestrator 111 may "pre-warm" or "warm cache" the applicable media storage device 142(2) by causing the specified content item to be transferred from secure object storage 115 to media storage device 142(2) before the user is scheduled to access the specified content item. In such instances, one or more media workflows 119 could specify information associated with a production workflow, such as a specific user that is to perform the task, and/or the time that the user is to begin the task, and/or the portion of the content item to which the user requires access. In such instances, media orchestrator 111 could determine information associated with the portion of the content item, such as the size of the specific portion of the content item, and employ heuristics to schedule the transfer of the specific content item and provide routing information associated with the transfer.

For example, a first media workflow 119(1) could specify an upcoming task associated with a first portion of a content item that is to be scheduled performed by a user associated with spoke network 140(2), where the upcoming task is scheduled to start in 24 hours. A second media workflow 119(2) could specify that all portions of the content item that are not associated with a production task are to be archived in secure object storage 115. In such an instance, media orchestrator 111 could use the information included in the media workflows 119(1)-119(2) to perform one or more heuristics associated with the content item. Media orchestrator 111 may perform the heuristics to identify the portion of content item associated with the upcoming task, identify the media storage device currently storing the content item, and identify the applicable target media storage device 142(2) that optimizes the performance of the upcoming task. In some embodiments, the current location of the specified content item includes the particular network (e.g., hub network 110) and/or the particular storage device (e.g., secure object storage 115) that is currently storing the specified content item. Media orchestrator 111 could communicate with both storage devices in order for the specified content item to be transferred from the secure object storage 115, in a manner that causes the content item target media storage device 142(2) within 24 hours, such that the content item is stored in the target media storage device 142(2) when the upcoming task is commencing. In some embodiments, media orchestrator 111 could also communicate with the storage device currently storing the content item such that the remaining portion of the content item is stored in secure object storage 115.

Media transfer agent 113 transfers content items between media storage devices 142(1)-142(2) in spoke networks 140(1)-140(2) and storage devices in hub network 110 (e.g., secure object storage 115). In various embodiments, media transfer agent 113 may include a key store that includes one or more keys used by one or more users and/or devices in order to access encrypted content items and/or secure data stores. For example, media transfer agent 113 could include one or more keys, provided by security module 105, that are necessary to access one or more portions of secure object storage 115. In such instances, media orchestrator 111 may communicate with media transfer agent 113 in order to authorize and/or authenticate media storage device 142 and enable media storage device 142 to download a content item that is stored in secure object storage 115.

Media catalog 117 maintains a registry that maps each content item and/or each portion of a given content item, that are included in network infrastructure 150, with the particular media storage device(s) 115, 142 that store at least one copy of the content item. In various embodiments, media catalog 117 may associate each content item with a file identifier and each portion of the content item with a separate object identifier. Additionally or alternatively, media orchestrator 111 may refer to one or more entries included in media catalog 117 to identify a given file identifier and/or object identifier in order to identify the media storage device(s) 115, 142 that is currently storing a copy of a specific content item. In various embodiments, media orchestrator 111 may update the one or more entries included in media catalog 117 to in order to reflect a transfer of a content item to a new media storage device 115, 142. In some embodiments, one or more media storage devices 115, 142 may send notifications to media catalog 117 via communications channel 170. In such instances, media catalog 117 may update without intervention by media orchestrator 111.

In some embodiments, media orchestrator 111 may refer to information from both media catalog 117 media workflow(s) 119 in order to determine routing information associated with the transfer of a content item. In such instances, media orchestrator 111 may refer to media catalog 117 to receive information associated with the content item (e.g., media catalog specifying that hub network 110 is currently storing the content item). Media orchestrator 111 may also refer to one or more media workflows 119 to identify the location of a user (e.g., spoke network 140(2)) that is associated with a scheduled task, the storage tier associated with completing the scheduled task, and the costs with transferring the content item to the target location and storing the content item in a given storage tier.

Media workflow(s) 119 (e.g., 119(1), 119(2), etc.) maintains registries associated with various workflow procedures and characteristics. In various embodiments, a given media workflow 119 may include one or more entries that map tasks in a production workflow to information associated with the tasks, such as location, users, costs, time period for performance, and so forth. In some embodiments, media controller 107 may include various types of media workflows 119, such as a cost workflow associated with minimizing optimizing storage usage based on differing storage costs and transfer costs. Additionally or alternatively, one type of media workflow 119 may include technical characteristics of one or more storage devices (e.g., available space, storage tier, device health, etc.).

For example, a media workflow 119 may be a production workflow that includes entries associated with various production tasks that are performed by one or more users. For a given production task, media workflow may include an entry that specifies the content items necessary to perform the production task, as well as information about the user assigned to perform a task. For example, media workflow 119 could contain an entry for a production task that includes a set of task parameters, such as the media application(s) associated with performing the task, the time the performance of the task is to commence, a set of authorized users that may perform the task, a particular user to which the task is assigned, the current geographic location of the assigned user, the spoke network 140 associated with the assigned user, a preferred storage tier in which content items are to be stored when performing the task, and so forth. Additionally or alternatively, media workflow 119 maintains information about users that are to perform the task. Such information can include, for example, the times that the user is to perform the task (and thus need access to a content item), the spoke network 140 and/or media storage device 142(2) associated with the user, the keys and/or permissions associated with the user, etc.

For example, media workflow 119 could be a production workflow that stores an entry for a subtitle generation task associated with adding subtitles corresponding to audio dialog and/or descriptions included in a specific portion of a content item. The entry within media workflow 119 could specify the portion of content item that needs to be accessed in order to commence the subtitle generation task, as well as a particular media application (e.g., a subtitle generation application) associated with performing a task. When a specific user is assigned the subtitle generation task, media workflow 119 could be updated such that the entry includes the geographic location of the specific user, the closest spoke network 140 (e.g., spoke network 140(2)), as well as a schedule of times (e.g., start time, duration, etc.), that the specific user is to have access to the portion of the content item. In various embodiments, media orchestrator 111 may refer to the entry included in media workflow 119 in order to generate routing information to transfer the specific portion of the content item to media storage device 142(2), corresponding to the spoke network 140(2) that is closest to the target user. In such instances, media orchestrator 111 may generate routing information such that the specific portion of the content item is stored in media storage device 142(2) by the specified time that the user is to start the subtitle generation task.

### Distributed Tiered Storage and Caching Platform

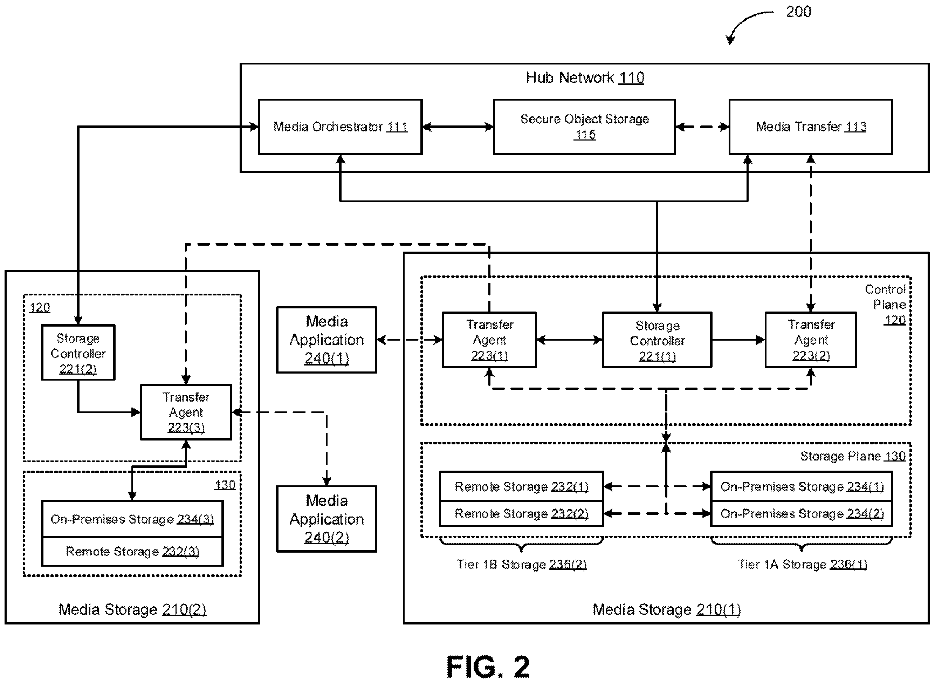

Figure 2 is a block diagram of various devices that may be implemented in conjunction with the network infrastructure of Figure 1, according to the various embodiments. As shown, network infrastructure 200 includes, without limitation, hub network 110, media storage devices 210(1)-210(2), and media applications 240(1)-240(2). Each media storage device 210 includes control plane 120 and storage plane 130. Control plane 120 includes storage controllers 221 (e.g., 221(1)-221(2)) and transfer agents 223 (e.g., 223(1)-223(3)). Storage plane 130 includes tiered storage groups that one or more remote storage partitions 132 (e.g., 231(1)-231(3)) and one or more on-premises storage partitions (e.g., 134(1)-134(3)), split into tier 1A storage 136(1) and tier 1B storage 136(2).

In operation, storage controller 121(1) communicates with media orchestrator 111 in order to transfer a specified content item. Media storage device(s) 210 (e.g., 210(1)-210(2)) includes control plane 120 that controls the transfer and/or storage of content items in storage plane 130. In various embodiments, media storage device 210 may implement one or more components in control plane 120 in order to securely connect to other devices within network infrastructure 200 and access secured content items. For example, one or more media transfer agents 223 (e.g., 223(1)-223(2)) could handle authorization and/or authentication for media storage device 210 when media storage device 210 transfers data from or to secure object storage 115. Media storage device 210 may use one or more components included in control plane 120 to perform authorization and/or authentication techniques in order to access data included in secure object storage 115.

In various embodiments, storage controller 121(1) causes transfer agent 223(2) to connect to storage plane 130. When downloading a content item, transfer agent 223(2) receives the content item from secure object storage 115 via media transfer agent 113 and causes the content item to be stored in a storage partition included in storage plane 130. When uploading a content item, transfer agent 223(2) retrieves the content item from storage plane 130 and transmits the content item to media transfer agent 113, which stores the content item in secure object storage 115. In some embodiments, storage controller 121(1) causes transfer agent 223(1) to retrieve the content item such that the content item can be accessed by media application 240(1). For example, storage controller 121(1) could respond to a message generated by media orchestrator 111 specifying a scheduled task associated with a content item by causing transfer agent to 223(1) to retrieve the content item from storage plane 130. In such instances, media application 240(1) accesses the content item from storage plane 130 via transfer agent 223(1).

Transfer agent 223 includes one or more agents (e.g., 223(1)-223(3)) that manage transfers of data between storage plane 130 and other locations. In various embodiments, control plane 120 may include a separate download transfer agent 223(1) and upload transfer agent 223(2). In some embodiments, control plane 120 may include a single transfer agent 223(3) that handles both uploads and downloads. In other embodiments, control plane 120 may include separate transfer agents 223 that manage transfers to different devices and/or components. For example, control plane 120 could include a first transfer agent 223(1) to manage access and/or transfer of content items between storage plane 130 and media application 240. Similarly, control plane 120 could include a second transfer agent 223(2) between storage plane 130 and other media storage devices 210(2)-210(4) and/or devices in hub network 110.

In various embodiments, transfer agent 223 receives information about the location of a specified content item from storage controller 221. The information may include the current location of the specified content item, or the target location of the specified content item. Based on the received information, transfer agent 223 connects to the applicable component at the applicable location (e.g., remote storage partition 232(1) and on-premises storage partition 234(3)) and transfers the specified content item. In various embodiments, transfer agent 223 may optimize transfers between storage from or to media storage device 210 by selecting a specific transfer method. For example, transfer agent 223(1) may employ TCP-based transfers for transfers to media application 240(1), while transfer agent 223(2) may execute UDP-based transfers to secure object storage 115. In some embodiments, transfer agent 223 may warm cache a specified content item to be stored at an applicable location by ensuring the specified content item is transferred to and at the applicable storage partition 232, 234 by a specified time. For example, transfer agent 223(2) could warm cache a specified content item by first downloading the specified content item from secure object storage 115 and storing the specified content item in tier 1A storage 236(1) (e.g., on-premises storage partition 234(2)) before a specified time.

Media application 240 (e.g., 240(1), 240(2)) includes one or more applications that access content items during execution. For example, media application 240(1) could access content items from tiered storage group 236 in media storage device 210(1) in order to enable a user to complete a task. In various embodiments, media application 240 includes various tools and functions that enable a user to perform specific tasks within media application 240. For example, media application 240(2) could be an instance of a three-dimensional (3D) design application that is implemented by a device within spoke network 140(2) (e.g., a workstation or endpoint device) that includes media storage device 210(2). In various embodiments, media application 240 could be one of several types of software products, such as coding environments, graphics design applications, word processing applications, entertainment applications (e.g., content playback applications, games, etc.), and so forth.

In various embodiments, storage controller 221 may manage secure access of media application 240. In various embodiments, storage controller 221 may communicate with one or more authorization and/or authentication servers in order to enable media application 240 to access and/or modify content items stored in storage plane 130. For example, media storage device 210(1) could communicate with media application 240(1) included in a separate device within spoke network 140(1). In such instances, storage controller 221(1) could cause the authorization and/or authentication servers to provide media application 240(1) access to data in tier 1A storage 236(1) and/or tier 1B storage 236(2), such as content items stored in storage plane 130 that are to be accessed and/or modified by a user.

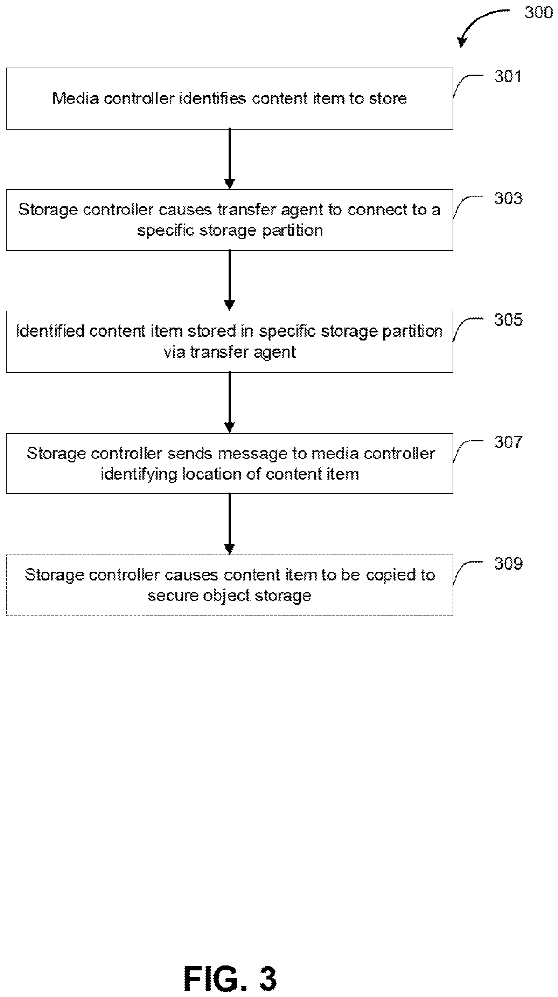

Figure 3 sets forth a flow diagram 300 of method steps for storing a content item within a storage partition of the network infrastructure 100 of Figure 1A, according to the various embodiments. Although the method steps are described with reference to the systems and call flows of Figures 1A-2, persons skilled in the art will understand that any system configured to implement the method steps, in any order, falls within the scope of the present disclosure.

Method 300 begins at step 301, where media controller 107 identifies a content item to store. In various embodiments, storage controller 221 may receive a message indicating that a particular content item is to be stored within the spoke network 140 in which storage controller 121 is located. In various embodiments, storage controller 221 may receive a message from media controller 107 to download a particular content item from a separate location. In some embodiments, media application 240 may provide an indication to save a new content item within the storage plane 130 at the spoke network 140.

At step 303, storage controller 221 causes a transfer agent 223 to connect to a storage partition. In various embodiments, media controller 107 and/or storage controller 221 may analyze the contents of the tiered storage group 136 included in the spoke network 140 in order to determine and/or select a particular storage partition 132, 134 included the tiered storage group 136 that is to store the content item. In various embodiments, media controller 107 may perform various heuristics to analyze parameters, such as storage parameters (e.g., capacity, storage latency, costs, etc.), and/or workflow parameters, in order to select a specific storage tier and/or a specific storage partition (e.g., a remote storage partition 132 or on-premises storage partition 134) that is most applicable to store the content item. In such instances, media controller 107 may send a command to storage controller 221, where storage controller 221 responds by connecting transfer agent 223 to the identified storage partition.

At step 305, the identified content item is stored in a particular storage partition via the transfer agent 223. In various embodiments, storage controller 121 may send one or more commands to a transfer agent 223 included in spoke network 140 in order to transfer the content item into the specific storage partition. In various embodiments, storage controller 121 may cause transfer agent 223 to apply one or more security keys in order to encrypt the content item and/or cause a secure transfer of the content item via a media channel 160, 180.

At step 307, storage controller 221 sends a message to media controller 107 identifying the location of the content item. In some embodiments, upon the content item being stored in the specific storage partition 132, 134, storage controller 121 may send a message to media controller 107 that reflects the current location (e.g., specific network, specific storage partition) of the content item. In some embodiments, the message may indicate that the content item is included in the spoke network 140. Additionally or alternatively, the message may indicate that the content item is stored in a specific storage partition 132, 134. In such instances, media controller 107 may update the media catalog 117 to reflect the current location of the content item.

At step 309, storage controller 221 optionally causes the content item to be copied to secure object storage 115. In various embodiments, media controller 107 may cause secure object storage 115 to synchronize the content item in order to ensure that any changes to the content item are copied into the main repository. In such instances, storage controller 221 may respond to a message received from media controller 107 by causing transfer agent 223 to send a copy of the content item to secure object storage 115.

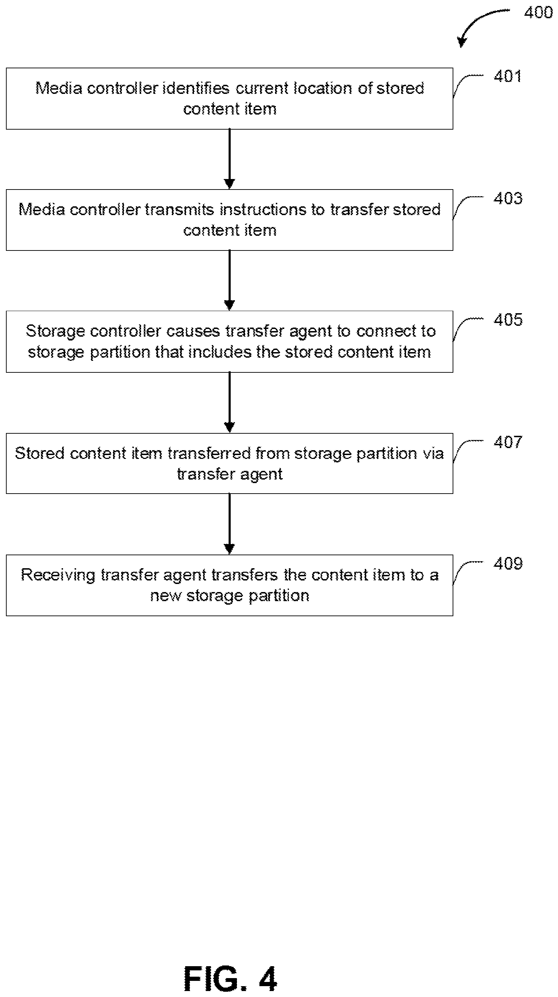

Figure 4 sets forth a flow diagram 400 of method steps for transferring a content item between storage partitions of the network infrastructure 100 of Figure 1A, according to the various embodiments. Although the method steps are described with reference to the systems and call flows of Figures 1A-2, persons skilled in the art will understand that any system configured to implement the method steps, in any order, falls within the scope of the present disclosure.

Method 400 begins at step 401, where media controller 107 identifies the current location of a stored content item. In various embodiments, media orchestrator 111 included in media controller 107 may receive information from media catalog 117 and/or one or more storage controllers 121 that specify the locations of various content items. The information may, for example, be information from media workflow 119 that includes the file identifier for a content item associated with a scheduled task. Media orchestrator 111 may use the file identifier for the content item to query media catalog 117 in order to identify the location(s) (e.g., spoke network 140(1)) and/or exact storage partition (e.g., on-premises storage partition 134(2)) that is currently storing a portion of specific content item.

At step 403, media orchestrator 111 transmits instructions to transfer the stored content item. In various embodiments, media orchestrator 111 may employ various heuristics associated with the media workflows 119 and/or other information associated with the storage plane 130 (e.g., costs associated with storage tiers, storage latencies, storage characteristics, etc.) to determine a target storage partition that is to store the content item. In such instances, media orchestrator 111 may send messages that includes routing information to storage controllers 121 associated with both the current location (e.g., storage controller 121(1)) and the target location (e.g., storage controller 121(5)), where the routing information is employed by the storage controllers 121 to cause the transfer of the specific content item to the target location.

At step 405, storage controller 121(1) causes a transfer agent 223 to connect to the storage partition that includes the stored content item. In some embodiments, storage controller 121(1) may respond to the routing information included in the message received from media orchestrator 111 by identifying the storage partition (e.g., remote storage 132) included in tiered storage group 136 that includes the specific content item. In such instances, storage controller 121(1) may send a message to transfer agent 223 to connect to the identified storage partition.

At step 407, the transfer agent 223 transfers the stored content item from the current storage partition. In various embodiments, upon connecting to the identified storage partition, transfer agent 223 may cause a secure transfer of the specific content item to a new location, as specified by the routing information provided by storage controller 121(1). For example, storage controller 121(1) could specify that the specific content item is to be transferred to spoke network 140(2). In such instances, transfer agent 223 may connect via a media channel 160 to a transfer agent in spoke network 140(2) and securely transfer the specific content item to the other transfer agent.

At step 409, the separate transfer agent receives the content item and transfers the content item to a new storage partition. In various embodiments, the separate transfer agent securely transfers the specific content item to a particular storage partition based on the received routing information provided by a corresponding storage controller. In some embodiments, the storage controller in the new location providing routing information that specifies the particular storage partition within the tiered storage group that is to store the specific content item. In such instances, the separate transfer agent connects to the new storage partition and causes the content item to be stored in the new storage partition.

In sum, a distributed global storage system includes a hub network and a plurality of spoke networks. Each spoke network includes a media storage device that includes at least one storage controller that manages the contents of a tiered storage group that is included in an independent storage plane. When ingesting a content item, the storage controller determines a particular storage partition within the tiered storage group in which to store the content item. The storage partition then causes the content item to be stored as an object within the tiered storage group. In various embodiments, the storage controller sends a message to the hub network indicating that the local spoke network is storing the content item. In such instances, the hub network indexes the content item and may synchronize the content item by causing the content item to be stored in secure object storage that is included in the hub network.

A media controller included in the hub network determines various scheduled tasks that are to be performed, as well as the locations where such tasks are to be performed. Based on such information, the media controller causes the storage controller to retrieve one or more specific content items from the tiered storage group. In some embodiments, the media controller specifies that the content item is to be made available locally. In such instances, the storage controller causes the content item to be transferred into a specific storage tier within in the local spoke network, such that a media application operating in the local spoke network may access the content item. In other embodiments, the media controller specifies that the content item is to be transferred to a separate spoke network. In such embodiments, the storage controller causes the content item to be retrieved and transferred to the separate spoke network. The storage controller located in the separate spoke network then causes the content item to be stored in within the tiered storage group of the separate spoke network such that a media application operating in the separate spoke network may access the content item.

At least one technological advantage of the disclosed techniques relative to the prior art is that a storage controller within a given network can efficiently transfer, store, and retrieve stored objects such that applications operating within the given network can efficiently access and modify the stored objects. Using a storage controller to manage a tiered group of storage partitions enables a distributed storage system to efficiently scale storage capabilities based on multiple parameters, including workflow parameters associated with users performing tasks using resources within the distributed computing system.

The invention to which this patent is directed is defined by the attached claims.

The descriptions of the various embodiments have been presented for purposes of illustration, but are not intended to be exhaustive or limited to the embodiments disclosed.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the scope of the claims that follow.

## Claims

1. A computer-implemented method for accessing data, the method comprising:
receiving, by a first storage controller (121) at a first spoke network (140) and from an entity remote to the first spoke network, a message identifying a first content item, wherein the first content item is identified based on a task that is to be performed by accessing the first content item;
determining, by the first storage controller, a first storage partition (132, 134) that stores the first content item, wherein the first storage partition is included in a tiered group of storage partitions accessible by the first spoke network;
retrieving, by the first storage controller from the first storage partition, the first content item; and
causing, by the first storage controller, the first content item to be transmitted to a second spoke network (140) for storage in a second storage partition (132, 134) accessible by the second spoke network, wherein each spoke network (140) is associated with a geographically-distinct region;
the method further comprising:
transmitting, by a second storage controller included in the second spoke network to a secure object storage included in a hub network, the first content item,
wherein the hub network is connected to the second spoke network, and
wherein the secure object storage stores the first content item as a secure object that acts as a source of truth for other copies of the first content item.

2. The computer-implemented method of claim 1, wherein the entity remote to the first spoke network comprises a media controller included in the hub network that is connected to the first spoke network.

3. The computer-implemented method of claim 2, wherein media controller:
analyzes a set of parameters associated with the task that is to be performed by accessing the first content item, wherein the set of parameters includes:
(i) at least one parameter associated with a technical characteristic of the first storage partition and the second storage partition,
(ii) a scheduled time specifying when the task is scheduled to be performed, or
(iii) a task parameter associated with a user performing the task;
based on the set of parameters, identifies the second storage partition for storing the first content item; and
generates the message identifying the first content item and the second storage partition in order to cause the first storage controller to transfer the first content item to the second storage partition before the scheduled time.

4. The computer-implemented method of claim 1, wherein a media application, operating within the second spoke network, accesses the first content item from the second storage partition.

5. The computer-implemented method of claim 4, wherein a user remotely accesses the media application from a network that is remote to at least the first spoke network and the second spoke network.

6. The computer-implemented method of claim 1, wherein:
the tiered group of storage partitions includes at least one local storage partition and at least one cloud-based storage partition; and
the second storage partition is included in a second tiered group of storage partitions at the second spoke network.

7. The computer-implemented method of claim 1, further comprising:
sending to the hub network, by the second storage controller included in the second spoke network, an update message indicating that the first content item is currently stored in the second storage partition, and
wherein a catalog included in the hub network is updated based on the update message.

8. The computer-implemented method of claim 1, further comprising:
receiving, by the first storage controller from a media application operating within the first spoke network, a second content item;
transmitting, by the first storage controller to the first storage partition, the second content item; and
sending, by the first storage controller to a hub network connected to the first spoke network, an update message indicating that the second content item is currently stored in the first storage partition.

9. The computer-implemented method of claim 8, wherein the second content item is received as a set of one or more files and further comprising, before transmitting the second content item to the first storage partition, translating the set of one or more files into an object.

10. A computer network that enables access to data, the computer network comprising:
a first spoke network (140) that includes a first storage controller (121) that receives, from an entity remote to the first spoke network, a message identifying a first content item, wherein the first content item is identified based on a task that is to be performed on the first content item, wherein the first storage controller is configured to access a tiered group of storage partitions that includes at least one local storage partition, and at least one cloud-based storage partition; and
a second spoke network
that accesses a second storage partition that stores the first content item received from the first spoke network, wherein each spoke network (140) is associated with a geographically-distinct region,
wherein the first storage controller further:
determines a first storage partition, included in the tiered group of storage partitions, that stores the first content item;
retrieves, from the first storage partition, the first content item; and
causes the first content item to be transmitted to the second spoke network;
wherein the second spoke network further comprises a second storage controller that is configured to transmit the first content item to a secure object storage included in the hub network; and
further wherein the hub network is connected to the second spoke network, and wherein the secure object storage stores the first content item as a secure object that acts as a source of truth for other copies of the first content item.

11. The computer network of claim 10, wherein the second storage controller is configured to:
receive the first content item from the first spoke network; and
cause the first content item to be stored in the second storage partition,
wherein a media application, operating within the second spoke network, is configured to access the first content item from the second storage partition.

12. The computer network of claim 10, wherein the tiered group of storage partitions is included in a storage plane that is separate from a control plane that includes the first storage controller.

13. The computer network of claim 12, further comprising a set of transfer agents included in the control plane in the first spoke network, wherein the first storage controller causes at least one transfer agent included in the set of transfer agents to securely transfer the first content item from the first storage partition.

14. A computer program product comprising one or more non-transitory computer-readable storage media including instructions that, when executed by one or more processors, cause the one or more processors to perform the steps of any of claims 1 to 9.

## Patentansprüche

1. Computerimplementiertes Verfahren zum Zugreifen auf Daten, wobei das Verfahren Folgendes umfasst:
Empfangen, durch eine erste Speichersteuerung (121) an einem ersten Speichennetzwerk (140) und von einer Entität entfernt von dem ersten Speichennetzwerk, einer Nachricht, die ein erstes Inhaltselement identifiziert, wobei das erste Inhaltselement basierend auf einer Aufgabe identifiziert wird, die durch Zugreifen auf das erste Inhaltselement durchzuführen ist;
Bestimmen, durch die erste Speichersteuerung, einer ersten Speicherpartition (132, 134), die das erste Inhaltselement speichert, wobei die erste Speicherpartition in einer gestuften Gruppe von Speicherpartitionen enthalten ist, auf die durch das erste Speichennetzwerk zugegriffen werden kann;
Abrufen, durch die erste Speichersteuerung von der ersten Speicherpartition, des ersten Inhaltselements; und
Bewirken, dass durch die erste Speichersteuerung das erste Inhaltselement zu einem zweiten Speichennetzwerk (140) zur Speicherung in einer zweiten Speicherpartition (132, 134) übertragen wird, auf die durch das zweite Speichennetzwerk zugegriffen werden kann, wobei jedes Speichennetzwerk (140) mit einem geografisch unterschiedlichen Gebiet assoziiert ist;
wobei das Verfahren ferner Folgendes umfasst:
Übertragen, durch eine zweite Speichersteuerung, die in dem zweiten Speichennetzwerk enthalten ist, an einen sicheren Objektspeicher, der in einem Hub-Netzwerk enthalten ist, des ersten Inhaltselements,
wobei das Hub-Netzwerk mit dem zweiten Speichennetzwerk verbunden ist, und
wobei der sichere Objektspeicher das erste Inhaltselement als ein sicheres Objekt speichert, das als eine Quelle der Wahrheit für andere Kopien des ersten Inhaltselements fungiert.

2. Computerimplementiertes Verfahren nach Anspruch 1, wobei die Entität, die von dem ersten Speichennetzwerk entfernt ist, eine Mediensteuerung umfasst, die in dem Hub-Netzwerk enthalten ist, das mit dem ersten Speichennetzwerk verbunden ist.

3. Computerimplementiertes Verfahren nach Anspruch 2, wobei die Mediensteuerung:
einen Satz von Parametern analysiert, der mit der Aufgabe assoziiert ist, die durchgeführt werden soll, durch Zugreifen auf das erste Inhaltselement, wobei der Satz von Parametern Folgendes beinhaltet:
(i) mindestens einen Parameter, der mit einer technischen Charakteristik der ersten Speicherpartition und der zweiten Speicherpartition assoziiert ist,
(ii) eine geplante Zeit, die vorgibt, wann die Aufgabe geplant ist, oder
(iii) einen Aufgabenparameter, der mit einem Benutzer assoziiert ist, der die Aufgabe durchführt;
basierend auf dem Satz von Parametern die zweite Speicherpartition zum Speichern des ersten Inhaltselements identifiziert; und
die Nachricht erzeugt, die das erste Inhaltselement und die zweite Speicherpartition identifiziert, um zu bewirken, dass die erste Speichersteuerung das erste Inhaltselement vor der geplanten Zeit an die zweite Speicherpartition überträgt.

4. Computerimplementiertes Verfahren nach Anspruch 1, wobei eine Medienanwendung, die innerhalb des zweiten Speichennetzwerks arbeitet, auf das erste Inhaltselement von der zweiten Speicherpartition zugreift.

5. Computerimplementiertes Verfahren nach Anspruch 4, wobei ein Benutzer auf die Medienanwendung von einem Netzwerk aus zugreift, das mindestens von dem ersten Speichennetzwerk und dem zweiten Speichennetzwerk entfernt ist.

6. Computerimplementiertes Verfahren nach Anspruch 1, wobei:
die gestufte Gruppe von Speicherpartitionen mindestens eine lokale Speicherpartition und mindestens eine Cloud-basierte Speicherpartition beinhaltet; und
die zweite Speicherpartition in einer zweiten gestuften Gruppe von Speicherpartitionen an dem zweiten Speichennetzwerk enthalten ist.

7. Computerimplementiertes Verfahren nach Anspruch 1, das ferner Folgendes umfasst:
Senden einer Aktualisierungsnachricht an das Hub-Netzwerk durch die zweite Speichersteuerung, die in dem zweiten Speichennetzwerk enthalten ist, die angibt, dass das erste Inhaltselement derzeit in der zweiten Speicherpartition gespeichert ist, und
wobei ein in dem Hub-Netzwerk enthaltener Katalog basierend auf der Aktualisierungsnachricht aktualisiert wird.

8. Computerimplementiertes Verfahren nach Anspruch 1, das ferner Folgendes umfasst:
Empfangen, durch die erste Speichersteuerung von einer Medienanwendung, die innerhalb des ersten Speichennetzwerks arbeitet, eines zweiten Inhaltselements;
Übertragen, durch die erste Speichersteuerung an die erste Speicherpartition, des zweiten Inhaltselements; und
Senden, durch die erste Speichersteuerung an ein mit dem ersten Speichennetzwerk verbundenes Hub-Netzwerk, einer Aktualisierungsnachricht, die angibt, dass das zweite Inhaltselement aktuell in der ersten Speicherpartition gespeichert ist.

9. Computerimplementiertes Verfahren nach Anspruch 8, wobei das zweite Inhaltselement als ein Satz aus einer oder mehreren Dateien empfangen wird und ferner vor dem Übertragen des zweiten Inhaltselements an die erste Speicherpartition das Übersetzen des Satzes aus einer oder mehreren Dateien in ein Objekt umfasst.

10. Computernetzwerk, das Zugriff auf Daten ermöglicht, wobei das Computernetzwerk Folgendes umfasst:
ein erstes Speichennetzwerk (140), das eine erste Speichersteuerung (121) beinhaltet, die von einer Entität entfernt von dem ersten Speichennetzwerk eine Nachricht empfängt, die ein erstes Inhaltselement identifiziert, wobei das erste Inhaltselement basierend auf einer Aufgabe identifiziert wird, die an dem ersten Inhaltselement durchzuführen ist, wobei die erste Speichersteuerung dazu ausgelegt ist, auf eine gestufte Gruppe von Speicherpartitionen zuzugreifen, die mindestens eine lokale Speicherpartition beinhaltet, und mindestens eine Cloud-basierte Speicherpartition; und
ein zweites Speichennetzwerk, das auf eine zweite Speicherpartition zugreift, die das erste Inhaltselement speichert, das von dem ersten Speichennetzwerk empfangen wird, wobei jedes Speichennetzwerk (140) mit einer geografisch unterschiedlichen Region assoziiert ist,
wobei die erste Speichersteuerung ferner:
eine erste Speicherpartition bestimmt, die in der gestuften Gruppe von Speicherpartitionen enthalten ist, die das erste Inhaltselement speichert;
das erste Inhaltselement von der ersten Speicherpartition abruft; und
bewirkt, dass das erste Inhaltselement an das zweite Speichennetzwerk übertragen zu werden;
wobei das zweite Speichennetzwerk ferner eine zweite Speichersteuerung umfasst, die dazu ausgelegt ist, das erste Inhaltselement an einen sicheren Objektspeicher zu übertragen, der in dem Hub-Netzwerk enthalten ist; und
wobei ferner das Hub-Netzwerk mit dem zweiten Speichennetzwerk verbunden ist und wobei der sichere Objektspeicher das erste Inhaltselement als ein sicheres Objekt speichert, das als eine Quelle der Wahrheit für andere Kopien des ersten Inhaltselements fungiert.

11. Computernetzwerk nach Anspruch 10, wobei die zweite Speichersteuerung zu Folgendem ausgelegt ist:
das erste Inhaltselement von dem ersten Speichennetzwerk zu empfangen; und
zu bewirken, dass das erste Inhaltselement in der zweiten Speicherpartition gespeichert wird,
wobei eine Medienanwendung, die innerhalb des zweiten Speichennetzwerks arbeitet, dazu ausgelegt ist, von der zweiten Speicherpartition auf das erste Inhaltselement zuzugreifen.

12. Computernetzwerk nach Anspruch 10, wobei die gestufte Gruppe von Speicherpartitionen in einer Speicherebene enthalten ist, die von einer Steuerebene getrennt ist, die die erste Speichersteuerung beinhaltet.

13. Computernetzwerk nach Anspruch 12, das ferner einen Satz von Transferagenten umfasst, die in der Steuerebene in dem ersten Speichennetzwerk enthalten sind, wobei die erste Speichersteuerung bewirkt, dass mindestens ein Transferagent, der in dem Satz von Transferagenten enthalten ist, das erste Inhaltselement sicher von der ersten Speicherpartition überträgt.

14. Computerprogrammprodukt, das ein oder mehrere nichtflüchtige computerlesbare Speichermedien umfasst, die Anweisungen beinhalten, die, wenn sie von einem oder mehreren Prozessoren ausgeführt werden, bewirken, dass der eine oder die mehreren Prozessoren die Schritte nach einem der Ansprüche 1 bis 9 durchführen.

## Revendications

1. Procédé mis en œuvre par ordinateur pour accéder à des données, le procédé comprenant :
la réception, par un premier contrôleur de stockage (121) au niveau d'un premier réseau en étoile (140) et depuis une entité distante du premier réseau en étoile, d'un message identifiant un premier élément de contenu, le premier élément de contenu étant identifié sur la base d'une tâche qui doit être effectuée en accédant au premier élément de contenu ;
la détermination, par le premier contrôleur de stockage, d'une première partition de stockage (132, 134) qui stocke le premier élément de contenu, la première partition de stockage étant incluse dans un groupe à niveaux de partitions de stockage accessibles par le premier réseau en étoile ;
la récupération, par le premier contrôleur de stockage à partir de la première partition de stockage, du premier élément de contenu ; et
le fait d'amener le premier contrôleur de stockage à transmettre le premier élément de contenu à un second réseau en étoile (140) pour stockage dans une seconde partition de stockage (132, 134) accessible par le second réseau en étoile, chaque réseau en étoile (140) étant associé à une région géographiquement distincte ;
le procédé comprenant en outre :
la transmission, par un second contrôleur de stockage inclus dans le second réseau en étoile, à un stockage d'objets sécurisé inclus dans un réseau concentrateur, du premier élément de contenu,
dans lequel le réseau concentrateur est connecté au second réseau en étoile, et
dans lequel le stockage d'objets sécurisé stocke le premier élément de contenu en tant qu'objet sécurisé qui agit comme source de vérité pour d'autres copies du premier élément de contenu.

2. Procédé mis en œuvre par ordinateur selon la revendication 1, dans lequel l'entité distante du premier réseau en étoile comprend un contrôleur de support inclus dans le réseau concentrateur qui est connecté au premier réseau en étoile.

3. Procédé mis en œuvre par ordinateur selon la revendication 2, dans lequel le contrôleur de support :
analyse un ensemble de paramètres associés à la tâche qui doit être effectuée en accédant au premier élément de contenu, l'ensemble de paramètres comprenant :
(i) au moins un paramètre associé à une caractéristique technique de la première partition de stockage et de la seconde partition de stockage,
(ii) une heure planifiée précisant quand la réalisation de la tâche est planifiée, ou
(iii) un paramètre de tâche associé à un utilisateur effectuant la tâche ;
sur la base de l'ensemble de paramètres, identifie la seconde partition de stockage pour stocker le premier élément de contenu ; et
génère le message identifiant le premier élément de contenu et la seconde partition de stockage afin que le premier contrôleur de stockage transfère le premier élément de contenu à la seconde partition de stockage avant l'heure planifiée.

4. Procédé mis en œuvre par ordinateur selon la revendication 1, dans lequel une application multimédia, fonctionnant à l'intérieur du second réseau en étoile, accède au premier élément de contenu à partir de la seconde partition de stockage.

5. Procédé mis en œuvre par ordinateur selon la revendication 4, dans lequel un utilisateur accède à distance à l'application multimédia à partir d'un réseau qui est distant d'au moins le premier réseau en étoile et le second réseau en étoile.

6. Procédé mis en œuvre par ordinateur selon la revendication 1, dans lequel :
le groupe à niveaux de partitions de stockage comprend au moins une partition de stockage locale et au moins une partition de stockage en nuage ; et
la seconde partition de stockage est incluse dans un second groupe à niveaux de partitions de stockage dans le second réseau en étoile.

7. Procédé mis en œuvre par ordinateur selon la revendication 1, comprenant en outre :
l'envoi au réseau concentrateur, par le second contrôleur de stockage inclus dans le second réseau en étoile, d'un message de mise à jour indiquant que le premier élément de contenu est actuellement stocké dans la seconde partition de stockage, et
dans lequel un catalogue inclus dans le réseau concentrateur est mis à jour sur la base du message de mise à jour.

8. Procédé mis en œuvre par ordinateur selon la revendication 1, comprenant en outre :
la réception, par le premier contrôleur de stockage depuis une application multimédia fonctionnant à l'intérieur du premier réseau en étoile, d'un second élément de contenu ;
la transmission, par le premier contrôleur de stockage à la première partition de stockage, du second élément de contenu ; et
l'envoi, par le premier contrôleur de stockage à un réseau concentrateur connecté au premier réseau en étoile, d'un message de mise à jour indiquant que le second élément de contenu est actuellement stocké dans la première partition de stockage.

9. Procédé mis en œuvre par ordinateur selon la revendication 8, dans lequel le second élément de contenu est reçu sous la forme d'un ensemble d'un ou de plusieurs fichiers et comprenant en outre, avant la transmission du second élément de contenu à la première partition de stockage, la traduction de l'ensemble d'un ou de plusieurs fichiers en un objet.

10. Réseau informatique permettant l'accès à des données, le réseau informatique comprenant :
un premier réseau en étoile (140) qui comprend un premier contrôleur de stockage (121) qui reçoit, depuis une entité distante du premier réseau en étoile, un message identifiant un premier élément de contenu, le premier élément de contenu étant identifié sur la base d'une tâche qui doit être effectuée sur le premier élément de contenu, le premier contrôleur de stockage étant configuré pour accéder à un groupe à niveaux de partitions de stockage qui comprend au moins une partition de stockage locale, et au moins une partition de stockage en nuage ; et
un second réseau en étoile qui accède à une seconde partition de stockage qui stocke le premier élément de contenu reçu depuis le premier réseau en étoile, chaque réseau en étoile (140) étant associé à une région géographiquement distincte,
dans lequel en outre le premier contrôleur de stockage :
détermine une première partition de stockage, incluse dans le groupe à niveaux de partitions de stockage, qui stocke le premier élément de contenu ;
récupère, à partir de la première partition de stockage, le premier élément de contenu ; et
provoque la transmission du premier élément de contenu au second réseau en étoile ;
dans lequel le second réseau en étoile comprend en outre un second contrôleur de stockage qui est configuré pour transmettre le premier élément de contenu à un stockage d'objets sécurisé inclus dans le réseau concentrateur ; et
dans lequel en outre le réseau concentrateur est connecté au second réseau en étoile, et dans lequel le stockage d'objets sécurisé stocke le premier élément de contenu en tant qu'objet sécurisé qui agit comme source de vérité pour d'autres copies du premier élément de contenu.

11. Réseau informatique selon la revendication 10, dans lequel le second contrôleur de stockage est configuré pour :
recevoir le premier élément de contenu depuis le premier réseau en étoile ; et
faire en sorte que le premier élément de contenu soit stocké dans la seconde partition de stockage,
dans lequel une application multimédia, fonctionnant à l'intérieur du second réseau en étoile, est configurée pour accéder au premier élément de contenu à partir de la seconde partition de stockage.

12. Réseau informatique selon la revendication 10, dans lequel le groupe à niveaux de partitions de stockage est inclus dans un plan de stockage qui est séparé d'un plan de commande qui inclut le premier contrôleur de stockage.

13. Réseau informatique selon la revendication 12, comprenant en outre un ensemble d'agents de transfert inclus dans le plan de commande dans le premier réseau en étoile, dans lequel le premier contrôleur de stockage amène au moins un agent de transfert inclus dans l'ensemble d'agents de transfert à transférer de manière sécurisée le premier élément de contenu à partir de la première partition de stockage.

14. Produit programme informatique comprenant un ou plusieurs supports de stockage non transitoires lisibles par ordinateur contenant des instructions qui, lorsqu'elles sont exécutées par un ou plusieurs processeurs, amènent le ou les processeurs à exécuter le procédé selon l'une quelconque des revendications 1 à 9.
